Europäisches Patentamt

European Patent Office

Office européen des brevets

(11) Numéro de publication: **0 281 460 B1**

(19)

(12) **FASCICULE DE BREVET EUROPEEN**

(45) Date de publication de fascicule du brevet: **28.04.93** (51) Int. Cl.5: **C08L 5/00, A01N 25/10**

(21) Numéro de dépôt: **88400353.4**

(22) Date de dépôt: **17.02.88**

(54) Compositions aqueuses contenant un composé cationique et de la gomme xanthane.

(30) Priorité: **23.02.87 FR 8702294**

(43) Date de publication de la demande:
**07.09.88 Bulletin 88/36**

(45) Mention de la délivrance du brevet:
**28.04.93 Bulletin 93/17**

(84) Etats contractants désignés:
**AT BE CH DE ES FR GB GR IT LI LU NL SE**

(56) Documents cités:
**EP-A- 0 219 281
EP-A- 0 237 418
DE-A- 1 542 930
FR-A- 2 146 504
US-A- 4 270 916**

**PATENT ABSTRACTS OF JAPAN, vol. 4, no.
30 (C-2)[512], 15 mars 1980; & JP-A-55 4336
(KIYOURITSU SANITARII K.K.) 12-01-1980**

**PATENT ABSTRACTS OF JAPAN, vol. 4, no.
190 (C-37)[672], 26 décembre 1980; & JP-A-55
129 201 (KAO SEKKEN K.K.) 06-10-1980**

**CHEMICAL ABSTRACTS, vol. 87, 1977, page
92, no. 54836s, Columbus, Ohio, US; P.A.
SANDFORD et al.: "Variation in Xanthomonas**

**campetris NRRL B-1459: characterization of
xanthan products of differing pyruvic acid
content" & ACS SYMP. SER. 1977, 45
(EXTRACELL. MICROB POLYSACCHARIDES,
SYMP.), 192-210**

(73) Titulaire: **RHONE-POULENC CHIMIE
25, quai Paul Doumer
F-92408 Courbevoie Cédex(FR)**

(72) Inventeur: **Schuppiser, Jean-Luc
12, allée d'Appolon Gressy
F-77410 Claye Souilly(FR)**
Inventeur: **Knipper, Mogali
78, avenue Secrétan
F-7501 Paris(FR)**

(74) Mandataire: **Fabre, Madeleine-France et al
RHONE-POULENC INTERSERVICES Service
Brevets Chimie 25, quai Paul Doumer
F-92408 Courbevoie Cédex (FR)**

## Description

L'invention concerne des compositions de matières contenant en solution aqueuse un composé organique cationique et de la gomme xanthane. L'invention a pour objet plus particulier des compositions aqueuses phytosanitaires contenant une matière active cationique.

La gomme xanthane, en raison de ses propriétés épaississantes, de son pouvoir de suspension élevé et de sa rhéologie particulière, est utilisée largement dans des industries variées, notamment dans les industries de l'alimentation, du bâtiment, du textile, de la peinture, du papier, des cosmétiques, de l'agriculture, du pétrole, etc...

La gomme xanthane est un hétéropolysaccharide anionique qui consiste en unités D-glucose, D-mannose et D-acide glucuronique avec des radicaux acétyl et pyruvate fixés sur les unités mannose. La masse moléculaire est supérieure à $10^6$. Comme il est avantageux dans les applications variées d'avoir une concentration relativement faible de l'agent épaississant, les grades industriels disponibles actuellement sur le marché présentent une haute viscosité correspondant à une masse moléculaire comprise entre $3.10^6$ et $5.10^6$

Du fait de son caractère anionique, la gomme xanthane est reconnue être généralement incompatible avec les ions cationiques, ce qui est un obstacle à son emploi. Ainsi il est connu dans le domaine agricole, d'utiliser la gomme xanthane comme agent épaississant des compositions aqueuses contenant une matière active hydrosoluble à effet pesticide ou comme agent de stabilité et de suspension des dispersions aqueuses coulables contenant une matière active finement divisée ("flowables"). Ces solutions ou dispersions sont livrées dans le commerce sous forme d'un concentrat à 20-60 % de matière active et 0,02 à 2 % environ de gomme xanthane. Lorsque la matière active est hydrosoluble, cet emploi a cependant été limité dans la practique aux produits non ioniques ou anioniques.

Un problème particulier se pose à l'utilisateur qui, dans certains cas, souhaite, afin d'éviter plusieurs manipulations, mélanger la dispersion diluée du pesticide insoluble dans l'eau avec un pesticide hydrosoluble tel qu'un sel d'ammonium quaternaire. Il a été constaté en effet que, aux faibles concentrations en xanthane des formulations diluées, il se forme un complexe avec l'ammonium quaternaire qui se traduit par la formation de fibres denses insolubles dans l'eau. Outre que la formation du complexe conduit à une diminution de l'effet pesticide, des difficultés considérables ont été rencontrées au cours des pulvérisations faites sur le terrain, à cause du bouchage des buses de pulvérisation produit par les fibres insolubles.

La présente invention a pour objet principal de fournir des compositions aqueuses pseudoplastiques épaissies par de la gomme xanthane et renfermant un additif cationique qui puissent être diluées sans précipitation.

L'invention a pour objet plus particulier de fournir des compositions pesticides concentrées coulables contenant à la fois une matière active finement divisée insoluble dans l'eau et une matière active cationique hydrosoluble, telle que la partie hydrosoluble ne précipite pas par dilution pour former des précipités obstruants lors de son application sur le terrain.

Il est enfin souhaitable que l'on puisse se procurer des dispersions concentrées coulables contenant une matière active pesticide finement divisée insoluble dans l'eau et que ces dispersions puissent être diluées et additionnées d'une matière active cationique hydrosoluble sans précipitation.

La demanderesse a trouvé qu'il y avait une corrélation entre la capacité de la gomme xanthane à former des complexes avec les agents cationiques et la viscosité intrinsèque de la gomme xanthane.

Selon l'invention, les compositions aqueuses de matières sont caractérisées en ce qu'elles contiennent au moins un composé organique cationique hydrosoluble et de la gomme xanthane ayant une viscosité intrinsèque inférieure à 3500 cm$^3$/g mesurée en solution aqueuse NaCl (0,1 M - eau distillée) à 23°C avec un appareil LOW-SHEAR ®.

La préparation de la gomme xanthane par fermentation d'un hydrate de carbone sous l'action d'un microorganisme approprié est décrite dans de nombreuses publications. On peut se référer par exemple aux brevets US 3.020.206, US 3.020.207, US 3.391.060. Comme microorganisme, on utilise généralement les bactéries du genre Xanthomonas, et plus particulièrement X.campestris, bien que d'autres microorganismes aient été répertoriés dans la littérature pour produire des hétéropolysaccharides de structure similaire. La gomme xanthane utilisée dans les compositions de l'invention ayant une viscosité intrinsèque inférieure à 3500 cm3/g peut être obtenue en faisant varier les conditions de la fermentation (voir par exemple EP-A-32293) ou bien par traitement d'une gomme de haute viscosité. La dégradation en un produit de viscosité inférieure peut être réalisée par action de la chaleur, d'une enzyme d'un agent oxydant, d'un agent radicalaire, ou par hydrolyse acide, soit directement sur le moût de fermentation avant précipitation de la gomme, soit sur une solution reconstituée à partir de poudre.

La viscosité intrinsèque ( $\eta$ ) telle que spécifiée est déterminée par extrapolation à concentration nulle de la viscosité réduite

$$\frac{\eta - \eta_0}{\eta_0 C}$$

(où $\eta$ est la viscosité de la solution, $\eta_0$ la viscosité du solvant et C est la concentration de la gomme xanthane ) en utilisant l'équation de Huggins :

$$\frac{\eta - \eta_0}{\eta_0 C} = [\eta] + k' (\eta)^2 C$$

La viscosité spécifique

$$\frac{\eta - \eta_0}{\eta_0}$$

est mesurée sur des solutions aqueuses 0,1 M NaCl comme solvant dans un intervalle de concentration en xanthane compris entre 0 et 0,04 % en poids/volume. Les solutions sont préalablement filtrées sur filtre Millipore 5 $\mu$m. Les mesures sont effectuées à 23°C, avec un cisaillement compris entre 0 et 1 sec$^{-1}$ à l'aide d'un appareil LOW-SHEAR ® 30 de la Société Contraves. On trace la courbe de viscosité spécifique en fonction de la concentration et l'on extrapole à concentration nulle.

Les composés cationiques hydrosolubles formant des complexes insolubles avec la gomme xanthane sont représentés principalement par les hydroxydes et sels d'ammoniums quaternaires tels que chlorures, bromures, sulfates, chlorates, bromates, acétates, formiates, citrates, lactates, maléates, propionates, phosphates, succinates, tartrates, toluène sulfonates. Des exemples représentatifs de composés d'ammonium quaternaire qui réagissent avec les hétéropolysaccharides sont décrits dans le brevet US 3 163 602 auquel on peut se référer. Les ammoniums quaternaires qui portent une chaîne alkyle leur conférant un caractère hydrophobe et les ammoniums quaternaires difonctionnels sont particulièrement aptes à former des complexes insolubles.

Les composés cationiques et notamment les ammoniums quaternaires, sont utilisés dans des domaines d'application variés, par exemple dans les industries du textile, de la peinture, de l'agriculture, du nettoyage. Ils peuvent fonctionner en particulier comme agents tensio-actifs, antiseptiques, germicides, colorants, adoucissants. Des exemples représentatifs de composés d'usage courant incluent, sans limitation, les chlorures et bromures de n.alkyltrimethylammonium, de n. dialkyldimethylammonium, de n. alkyldimethylbenzylammonium, de n.alkylpyridinium, dans lesquels la chaine alkyl contient de préférence 8 à 24 atomes de carbone, tels que le chlorure de dodécyltrimethylammonium, le bromure d'hexadecyltrimethylammonium, le bromure de lauryldimethylammonium, le chlorure de didecyldimethylbenzylammonium, le chlorure d'hexadecylpyridinium.

Dans le domaine phytosanitaire, les composés d'ammonium quaternaire sont employés comme matière active à effet pesticide tels que bactéricides, insecticides, fongicides, herbicides, algacides, acaricides, nematicides, régulateurs de croissance des plantes. Comme exemples représentatifs de produits commerciaux, on peut citer le l dichlorure de 1,1′-diméthyl 4,4′-bipyridinium ou paraquat ; le diméthylsulfate de 1,1′-diméthyl 4,4′-bipyridinium ; le dibromure de 1,1′-éthylène 2,2′-bipyridinium ou diquat ; le méthylsulfate de 1,2-diméthyl 3,5-diphényl pyrazolium ou difenzoquat ; le chlorure de 2-chloroéthyltriméthylammonium ou chlormequat ; le bromure de 1-allyl-1-(3,7-diméthyloctyl) pipéridinium ou piproctanyl ; le dichlorure de 1,1′-bis-3,5-dimethylmorpholinocarbonylmethyl-4,4′-bipyridium ou morfamquat. D'autres composés utiles sont le dichlorure de 1,1′-di-2-hydroxyéthyl-4,4′-bipyridynium, le dichlorure de 1-(2-hydroxyéthyl)-1′-méthyl-4,4′-bipyridynium, le dichlorure de 1,1′-dicarbamoylméthyl-4,4′-bipyridynium, le dichlorure de 1,1′-bis-N,Ndiméthylcarbamoylméthyl-4,4′-bipyridynium, le dichlorure de 1,1′-bis-N,N-diéthylcarbamoylméthyl-4,4′-bipyridynium, le dichlorure de 1,1-di-(pipéridinocarbonylméthyl)-4,4′-bipyridynium, le dichlorure de 1,1′-diacétonyl-4,4′-bipyridynium, le dibromure de 1,1′-diéthoxycarbnylméthyl-4,4′-bipyridynium, le dibromure de 1,1′-diallyl-4-bipyridynium.

La gomme xanthane et le composé cationique sont présents dans les compositions en quantités usuelles dans les techniques considérées. L'invention ne requiert pas un dosage particulier puisqu'elle a principalement pour objet la stabilisation de la gomme xanthane qui est un constituant mineur de la composition.

Dans les compositions versables et pompables, la gomme xanthane est présente de manière générale en quantité comprise entre 0,005 et 2 %. Avantageusement, les compositions diluées contiennent la gomme xanthane en quantité inférieure à 0,1 %. La quantité du composé cationique peut varier dans une très large mesure par exemple entre 0,001 et 2,5 % pour les solutions diluées et entre 0,5 et 70 % pour les concentrats.

Les compositions selon l'invention peuvent également comprendre des additifs usuels tels que agents tensio-actifs, anti-mousses, agents abaissant le point de congélation, charges et autres.

Les compositions de l'invention peuvent être préparées par simple mélange des ingrédients sous agitation et à température ambiante. Elles peuvent se présenter sous forme d'une solution ou d'une suspension concentrée ou diluée contenant au moins le composé organique cationique et la gomme xanthane en solution dans l'eau. Il est préférable de dissoudre préalablement la gomme xanthane dans l'eau puis d'ajouter le composé cationique hydrosoluble, et, le cas échéant, les additifs conventionnels. On peut préparer un concentrat contenant les divers ingrédients puis le diluer ultérieurement à la dose requise sur les lieux mêmes de l'utilisation.

Ces compositions peuvent être diluées avec de l'eau en toutes proportions pour fournir des solutions exemptes d'agglomérats ou de précipité fibreux associés à la formation du complexe entre la gomme xanthane et le composé cationique.

Les compositions pesticides, qui forment une part de l'invention, peuvent comprendre, en outre, une matière active finement divisée insoluble dans l'eau, que l'on peut ajouter en même temps que les additifs conventionnels. Sous forme diluée, applicable par pulvérisation, ces compositions peuvent également être préparées par dilution d'un concentrat aqueux contenant une matière active insoluble à effet pesticide en suspension dans le liquide épaissi par la gomme xanthane et l'on ajoute la matière active cationique hydrosoluble à effet pesticide. Les compositions diluées préparées à partir d'une composition selon l'invention peuvent être appliquées au moyen de tous types de pulvérisateurs sans aucun bouchage des buses de pulvérisation.

La compatibilité des solutions aqueuses diluées de gomme xanthane de relativement faible viscosité intrinsèque avec un composé cationique ammonium quaternaire est illustrée par les exemples suivants :

Exemple 1

Un moût de gomme xanthane préparé dans des conditions standard pour applications industrielles est dégradé par traitement thermique de manière à obtenir différents lots ayant des viscosités intrinsèques [ $\eta$ ] variables. Sur chaque lot, la gomme xanthane est précipitée par l'isopropanol, séchée et broyée. Les viscosités intrinsèques sont déterminées de la manière indiquée précédemment. La gomme xanthane précipitée à partir du moût initial, non dégradé, présente une [ $\eta$ ] de 4500 cm$^3$/g.

A l'aide de chaque lot, on prépare des solutions aqueuses de concentration 0,1 %, 0,05 % et 0,005 %. A chacune des solutions on ajoute sous agitation une solution aqueuse à 10 % de dichlorure de 1,1′-diméthyl-4,4′-bipyridinium (Paraquat) commercialisé par la Société I.C.I., de manière à obtenir une concentration en matière active comprise entre 0,01 et 0,2 %. La précipitation du complexe de gomme xanthane et d'ammonium quaternaire, si elle a lieu, est immédiate sous forme de fibres insolubles.

Les différents essais et observations visuelles sont représentés dans le Tableau 1. La gomme xanthane est estimée être incompatible lorsqu'il se forme des fibres longues, de dimension supérieure à environ 2 mm, de texture grosse. On constate que :
- pour des concentrations en xanthane de 0,1 %, la gomme est compatible avec le paraquat quelle que soit la valeur de [ $\eta$ ],
- la compatibilité décroit en fonction inverse de la concentration en xanthane,
- la formation du complexe sous forme de fibres longues décroit avec la diminution de [ $\eta$ ]. Pour une valeur inférieure à 3500 cm$^3$/g, la gomme xanthane est considérée être compatible en toutes proportions utiles avec le paraquat.

4

TABLEAU 1

| gomme xanthane % | $[\eta]cm^3/g$ | Paraquat % | | | | |
|---|---|---|---|---|---|---|
| | | 0,01 | 0,02 | 0,05 | 0,1 | 0,2 |
| 0,005 | 2000 | 0 | 0 | 0 | 0 | 0 |
| | 2700 | 0 | 0 | 0 | 0+ | 0+ |
| | 3500 | 0 | 0+ | + | + | + |
| | 4500 | + | + | + | + | + |
| 0,05 | 2000 | 0 | 0 | 0 | 0 | 0 |
| | 2700 | 0 | 0 | 0 | 0 | 0 |
| | 3500 | 0 | 0 | 0 | 0+ | 0+ |
| | 4500 | 0+ | + | + | + | + |
| 0,1 | 2700 | 0 | 0 | 0 | 0 | 0 |
| | 4500 | 0 | 0 | 0 | 0 | 0 |

0   : absence de fibres

0+  : rares fibres de 1 à 2 mm - texture fine  - COMPATIBLE

+   : fibres longues › 2 mm - texture grosse - INCOMPATIBLE

Exemple 2

A l'aide des lots de gomme xanthane de l'exemple 1, on prépare des solutions aqueuses à 0,01 % en poids. Dans chacune des solutions, on dissout une quantité de bromure de lauryl diméthyl benzylammonium (CEQUARTYL A ®) de manière à obtenir une concentration en tensio-actif comprise entre 0,01 et 1 %. Les résultats au regard de la précipitation du complexe figurent dans le Tableau 2.

EP 0 281 460 B1

TABLEAU 2

| Gomme xanthane % | [ $\eta$ ]cm³/g | Céquartyl A % | | | | |
|---|---|---|---|---|---|---|
| | | 0,01 | 0,02 | 0,05 | 0,1 | 1 |
| 0,01 | 2000 | 0 | 0 | 0 | 0 | 0 |
| | 2700 | 0 | 0 | 0 | 0 | 0 |
| | 3500 | 0+ | + | + | + | + |
| | 4500 | + | + | + | + | + |

0   : absence de fibres

0+  : rares fibres de 1 à 2 mm - texture fine

+   : fibres longues › 2 mm - texture grosse - INCOMPATIBLE

Exemple 3

On prépare des solutions aqueuses à 0,01 et 0,005 % de gomme xanthane à [ $\eta$ ] variable. Dans chacune des solutions, on dissout une quantité de chlorure de didecyldimethylbenzylammonium (bactéricide), telle que la concentration en matière active soit comprise entre 0,002 et 0,006 % en poids. Les résultats figurent dans le Tableau 3.

6

EP 0 281 460 B1

TABLEAU 3

| Gomme xanthane % | $[\eta]cm^3/g$ | Chlorure de didécyldiméthylbenzylammonium % | | | |
|---|---|---|---|---|---|
| | | 0,002 | 0,003 | 0,004 | 0,006 |
| 0,005 | 3000 | 0 | 0 | 0 | 0 |
| | 3200 | 0 | 0 | 0+ | + |
| | 5100 | + | + | + | + |
| 0,01 | 3000 | 0 | 0 | 0 | 0 |
| | 3200 | 0 | 0 | + | + |
| | 5100 | + | + | + | + |

0   : absence de fibres

0+  : rares fibres de 1 à 2 mm - Texture fine

+   : fibres longues - Texture grosse - INCOMPATIBLE

Exemple 4

On prépare une suspension fluide concentrée d'atrazine (chloro-2 éthylamino-4 isoporpylamino-6 triazine-1,3,5) :

| | |
|---|---|
| Atrazine | 400 g/l |
| Tensio-actif anionique | 30 g/l |
| Gomme xanthane [ $\eta$ ] 2700 cm$^3$/g | 1,6 g/l |
| Eau q.s.p. | 1 litre |

40 ml de la suspension-fluide concentrée sont dilués dans 940 ml d'eau distillée. On ajoute 20 ml de Paraquat en solution aqueuse à 2 %. On n'observe aucune formation de fibres insolubles.

En comparaison, une formulation identique, mais préparée avec de la gomme xanthane de [ $\eta$ ] 4500 cm$^3$/g, forme des fibres denses immédiatement après addition de Paraquat dans les mêmes conditions de dilution.

**Revendications**

1. Compositions aqueuses coulables de matières contenant au moins un composé organique hydrosoluble cationique et de la gomme xanthane caractérisées en ce que ladite gomme xanthane possède une viscosité intrinsèque inférieure à 3500 cm$^3$/g mesurée en solution aqueuse NaCl (0,1 M - eau distillée) à 23 °C avec un appareil LOW-SHEAR®.

2. Compositions aqueuses selon la revendication 1 caractérisées en ce que le composé cationique est un ammonium quaternaire.

7

**3.** Compositions aqueuses selon l'une des revendications 1 ou 2 caractérisées en ce que la quantité de gomme xanthane est comprise entre 0,005 et 2 % en poids et la quantité du composé cationique est comprise entre 0,001 et 70 % en poids par rapport au support aqueux.

**4.** Compositions aqueuses selon la revendication 3 caractérisées en ce que la quantité de gomme xanthane est comprise entre 0,005 et 0,1 % et la quantité de composé cationique est comprise entre 0,001 et 2,5 %.

**5.** Compositions aqueuses selon l'une des revendications 1 à 4 caractérisées en ce que le composé cationique est une matière active à effet pesticide, de type bactéricides, insecticides, fongicides, herbicides, algacides, acaricides, nematicides, régulateurs de croissance des plantes.

**6.** Compositions aqueuses selon la revendication 5 caractérisées en ce qu'elles contiennent en outre, en dispersion stable, une matière active pesticide finement divisée insoluble dans l'eau.

**7.** Compositions aqueuses selon l'une des revendications 1 à 4 caractérisées en ce que le composé cationique est un agent tensio-actif.

**8.** Compositions aqueuses selon l'une des revendications 1 à 4 caractérisées en ce que le composé cationique est un antiseptique.

**9.** Procédé de préparation des compositions aqueuses coulables de matières selon la revendication 6 caractérisé en ce que l'on dilue un concentrat aqueux contenant une matière active insoluble en suspension dans le liquide épaissi par la gomme xanthane possédant une viscosité intrinsèque inférieure à 3500 cm³/g mesurée en solution aqueuse NaCl (0,1 M - eau distillée) à 23 °C avec un appareil LOW-SHEAR® et l'on ajoute la matière active cationique hydrosoluble.

**Claims**

**1.** Flowable aqueous compositions of substances containing at least one cationic, hydrosoluble organic compound and xanthan gum, characterized in that the xanthan gum has an intrinsic viscosity below 3500 cm³/g measured in a NaCl aqueous solution (0.1 M - distilled water) at 23°C and with the LOW-SHEAR apparatus.

**2.** Aqueous compositions according to claim 1, characterized in that the cationic compound is a quaternary ammonium.

**3.** Aqueous compositions according to one of the claims 1 or 2, characterized in that the xanthan gum quantity is between 0.005 and 2 % by weight and the cationic compound quantity is between 0.001 and 70 % by weight, based on the aqueous support.

**4.** Aqueous compositions according to claim 3, characterized in that the xanthan gum quantity is between 0.005 and 0.1% and the cationic compound quantity is between 0.001 and 2.5%.

**5.** Aqueous compositions according to one of the claims 1 to 4, characterized in that the cationic compound is an active substance having a pesticidal action of the bactericide, insecticide, fungicide, herbicide, algacide, acaricide, nematicide and plant growth regulator type.

**6.** Aqueous compositions according to claim 5, characterized in that they also contain, in stable dispersion, a finely divided, water-insoluble, pesticidal active substance.

**7.** Aqueous compositions according to one of the claims 1 to 4, characterized in that the cationic compound is a surfactant.

**8.** Aqueous compositions according to one of the claims 1 to 4, characterized in that the cationic compound is an antiseptic.

8

9. Process for the preparation of flowable aqueous compositions of materials according to claim 6, characterized in that dilution takes place of an aqueous concentrate containing an insoluble active substance suspended in the liquid thickened by xanthan gum and having an intrinsic viscosity below 3500 cm$^3$/g measured in a NaCl aqueous solution (0.1 M - distilled water) at 23°C and using a LOW-SHEAR apparatus and the hydrosoluble, cationic active substance is added.

**Patentansprüche**

1. Fließfähige wässrige Zusammensetzungen von zumindest eine kationische wasserlösliche organische Verbindung enthaltenden Stoffen und Xanthangummi, dadurch gekennzeichnet, daß der Xanthangummi eine Intrinsic-Viskosität von geringer als 3500 cm$^3$/g, gemessen in wässriger NaCl-Lösung (0,1 M-destilliertes Wasser) bei 23 °C mit einer LOW-SHEAR®-Apparatur, besitzt.

2. Wässrige Zusammensetzungen gemäß Anspruch 1, dadurch gekennzeichnet, daß die kationische Verbindung ein quaternäres Ammonium ist.

3. Wässrige Zusammensetzungen gemäß einem der Ansprüche 1 oder 2, dadurch gekennzeichnet, daß die Menge des Xanthangummis zwischen 0,005 und 2 Gew.% beträgt und die Menge der kationischen Verbindung zwischen 0,001 und 70 Gew.%, bezogen auf den wässrigen Träger, beträgt.

4. Wässrige Zusammensetzungen gemäß Anspruch 3, dadurch gekennzeichnet, daß die Menge des Xanthangummis zwischen 0,005 und 0,1 % beträgt und die Menge der kationischen Verbindung zwischen 0,001 und 2,5 % beträgt.

5. Wässrige Zusammensetzungen gemäß einem der Ansprüche 1 bis 4, dadurch gekennzeichnet, daß die kationische Verbindung ein Wirkstoff mit pestizider Wirkung vom Typ der Bakterizide, Insektizide, Fungizide, Herbizide, Algazide, Akarizide, Nematizide, Pflanzen-Wachstumsregulatoren ist.

6. Wässrige Zusammensetzungen gemäß Anspruch 5, dadurch gekennzeichnet, daß sie außerdem in stabiler Dispersion einen in Wasser unlöslichen feinverteilten pestiziden Wirkstoff enthalten.

7. Wässrige Zusammensetzungen gemäß einem der Ansprüche 1 bis 4, dadurch gekennzeichnet, daß die kationische Verbindung ein oberflächenaktives Mittel ist.

8. Wässrige Zusammensetzungen gemäß einem der Ansprüche 1 bis 4, dadurch gekennzeichnet, daß die kationische Verbindung ein Antiseptikum ist.

9. Verfahren zur Herstellung der fließfähigen wässrigen Zusammensetzungen von Stoffen gemäß Anspruch 6, dadurch gekennzeichnet, daß man ein wässriges Konzentrat, enthaltend einen unlöslichen Wirkstoff in Suspension in der durch Xanthangummi mit einer Intrinsic-Viskosität von geringer als 3500 cm$^3$/g, gemessen in wässriger NaCl-Lösung (0,1 M-destilliertes Wasser) bei 23°C mit einer LOW-SHEAR®-Apparatur, verdickten Flüssigkeit, verdünnt und den wasserlöslichen kationischen Wirkstoff zugibt.